# EUROPEAN PATENT SPECIFICATION

(11) **EP 3 402 342 B1**
(45) Date of publication and mention of the grant of the patent: **21.10.2026**
(21) Application number: 17739161.2
(22) Date of filing: 17.01.2017
(51) Int. Cl.: A23B 2/10, A23B 11/10, A23B 70/00, A23L 2/02

(54) **CONTINUOUS HIGH PRESSURE PROCESSING OF FOOD AND BEVERAGE PRODUCTS**
KONTINUIERLICHE HOCHDRUCKVERARBEITUNG VON NAHRUNGSMITTELN UND GETRÄNKEN
TRAITEMENT À HAUTE PRESSION CONTINU DE PRODUITS ALIMENTAIRES ET DE BOISSONS

(30) Priority: 15.01.2016 US 201662279124 P
(43) Date of publication of application: 21.11.2018
(73) Proprietor: The Coca-Cola Company, Atlanta, GA 30313 (US)
(72) Inventor: MEHTA, Anish, Alpharetta GA 30004 (US); SCHUBERT, Hubertus, Smyrna GA 30082 (US); RAHMAN, Mamunur, Smyrna GA 30082 (US); BAKR, Shumi, Marietta GA 30068 (US); HENDERSON, Omari, Atlanta GA 30313 (US); LUENSE, Roger, Atlanta GA 30313 (US); GIRIBONI DE MELLO, Indauê Ieda, Atlanta, GA 30317 (US)
(74) Representative: Dehns
(86) International application number: PCT/US2017/013804
(87) International publication number: WO 2017/124106

(56) References cited:
- EP-A2- 1 051 087
- EP-B1- 1 027 835
- EP-B1- 1 100 340
- WO-A1-93/19619
- WO-A2-99/38394
- ES-A1- 2 046 944
- ES-B1- 2 046 944
- JP-A- H04 174 669
- JP-A- H1 084 885
- US-A- 6 004 508
- US-A1- 2004 126 480
- US-A1- 2008 152 775
- US-B2- 8 372 338

## Description

### FIELD OF THE INVENTION

This invention relates to a continuous pascalization process comprising high pressure processing of liquids. For example, implementations of the technologies disclosed herein can be applied to methods for continuous high pressure processing of food and beverage products.

### BACKGROUND

Conventionally, high pressure processing of food and beverage products is facilitated through application of uniform pressure about a packaged product. Generally, it is assumed that the application of uniform pressure results in the elimination or termination of a plurality of otherwise unfavorable food components, including food-borne pathogens such as spores, bacteria, yeasts, molds, and other components.

In conventional high pressure processing, the uniform pressure is applied through immersion of the packaged product in a chamber under a working fluid. The conventional high pressure processing applies pressure in the range of about 90,000 psi (620 MPa). The working fluid is used to repeatedly pressurize the contents of the chamber, and the packaged product, such that the product itself undergoes pressurization and subsequent depressurization. It follows that as the entire packaged product is pressurized, the packaging must be deformable if the contents of the package are also to be pressurized. Furthermore, as the entire packaged product is pressurized, this conventional process can only operate as batch processing of a fixed number of packaged products per processing event.

Batch processing requires several groups of prepackaged products to be prepared prior to high pressure processing. Post processing of the packaged products is required to eliminate traces of the working fluid from the exterior of the packages as well as further processing for final packaging of multiple packages of products for shipment to customers and/or consumers. Accordingly, batch processing requires several additional steps as compared to other continuous packaging methods.

However, continuous high pressure processing has generally been unfavorable due to a variety of factors. These factors include a lack of appropriate processing methodologies that generate reproducible reductions in food-borne pathogens and a resulting stable product requiring reduced refrigeration or no refrigeration.

The disclosure made herein is presented with respect to these and other considerations.

US 2008/152775 A1 discloses a process using dynamic high pressure for inactivation of food pathogens.

WO 99/38394 A2 discloses a method for ultra-high pressure inactivation of microorganisms in juice products.

ES 2 046 944 A1 discloses a process for food preservation using the simultaneous application of ultrasound and heat.

JP H10 84885 A disclose a process for food preservation using a high pressure-vessel to retain a food product at high pressure, and then sequentially reducing the pressure through a series of condensers.

US 2004/126480 A1 discloses a process for food preservation using a length of tubing, which is open at an outlet, so that a pressure gradient of at least 100MPa is present along the length of tube.

### SUMMARY

The present invention provides a continuous pascalization process that includes receiving, at an inlet, an unprocessed product of the continuous pascalization process, wherein the unprocessed product comprises a liquid, pressurizing the unprocessed product to a first pressure to create a pressurized product, wherein the first pressure is from 20,000 psi to 60,000 psi (140 MPa to 410 MPa), holding the pressurized product at the first pressure for a predetermined hold time, wherein the pressurized product is held at the first pressure as the pressurized product flows through the length of tubing, wherein a length of tubing is arranged to provide a specified time of travel between an inlet and an outlet that is approximately equal to the predetermined hold time, wherein the predetermined hold time is at least one minute, and depressurizing the pressurized product to a second pressure to create a processed product of the continuous pascalization process, the second pressure being less than the first pressure, wherein depressurizing the product includes causing the pressurized product to flow through shear and/or cavitation cells arranged serially along a flow path of the pressurized product, the shear and/or cavitation cells including multiple pressure releasing components arranged about the flow path of the pressurized product, wherein causing the pressurized to flow through multiple pressure releasing components subjects, the pressurized product to multiple shear stress events, and supplying the processed product from an outlet.

According to one implementation, the unprocessed product is a juice beverage or an extract of a fruit or vegetable.

According to one implementation, the unprocessed product is a dairy product.

According to one implementation, the unprocessed product is a fluid having food-borne pathogens existing therein and the processed product includes a reduced number of food-borne pathogens as compared to the unprocessed product.

According to one implementation, pressurizing the unprocessed product includes passing the unprocessed product through one or more compressors.

According to one implementation, inputting the unprocessed product includes pumping the unprocessed product with a pump.

According to one implementation, holding the pressurized product includes retaining the pressurized product at the first pressure in one or more hold cells.

According to one implementation, the one or more hold cells comprise one or more accumulation cells.

According to one implementation, the one or more accumulation cells each include a generally cylindrical cavity having a central axis coaxial to a flowpath of the associated accumulation cell, a frustoconical inlet arranged at a first end of the cylindrical cavity, and a frustoconical outlet arranged at a second end of the cylindrical cavity.

According to one implementation, the one or more hold cells comprise one or more lengths of tubing.

According to one implementation, the predetermined hold time is at least one minute. According to another implementation, the predetermined hold time more than 3 minutes, or more than 5 minutes. According to one implementation, the predetermined hold time is between about 3 and about 6 minutes. According to one implementation, the predetermined hold time is about 6 minutes. According to another implementation, the predetermined hold time is about nine minutes.

According to one implementation, the first pressure is abouttwenty- two thousand psi (about one hundred and fifty MPa). According to another implementation, the first pressure is about forty- five thousand psi (about three hundred and ten MPa). According to another implementation, the first pressure is about sixty thousand psi (about four hundred and ten MPa). According to one implementation, depressurizing the pressurized product includes subjecting the pressurized product to one or more cavitation events.

According to one implementation, depressurizing the pressurized product includes subjecting pressurized product to one or more shear stress events.

According to one implementation, depressurizing the pressurized product includes passing the product through an emulsifying cell or homogenization cell.

According to one implementation, the unprocessed product is a concentrated beverage component.

According to one implementation, the concentrated beverage component includes dissolved starch or sweetening component.

According to one implementation, the concentrated beverage component comprises a reconstitution ratio of about 3:1 to 10:1.

According to one implementation, the concentrated beverage component comprises a flavor component absent an added preservative agent.

According to one implementation, the processed product is absent an added preservative agent.

According to one implementation, the unprocessed product is a tea or coffee extract.

According to one implementation, the unprocessed product is a plant-based extract.

According to one implementation, the unprocessed product is a component usable in an alcoholic beverage having an alcohol content less than 15.5% by volume.

This disclosure is also related to a product (not claimed) produced by any of the processes described herein.

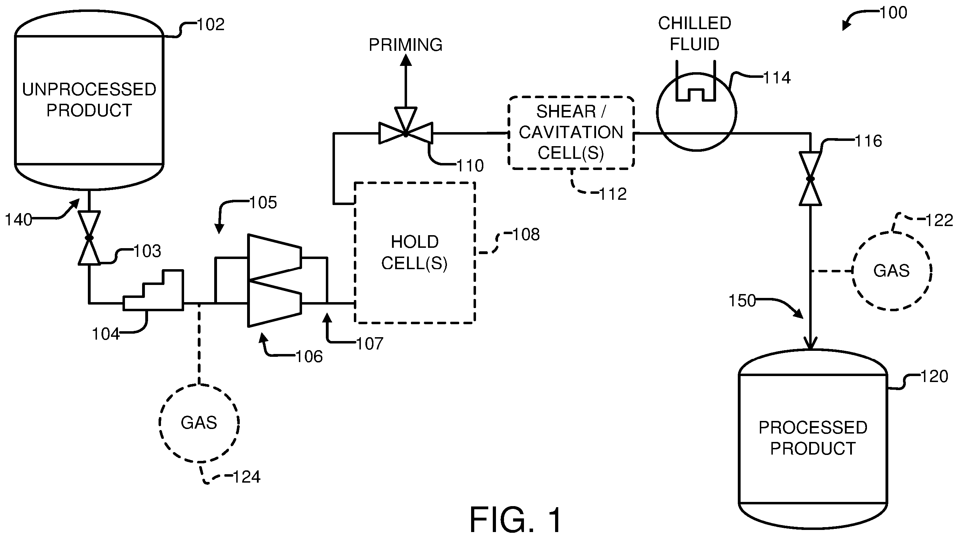

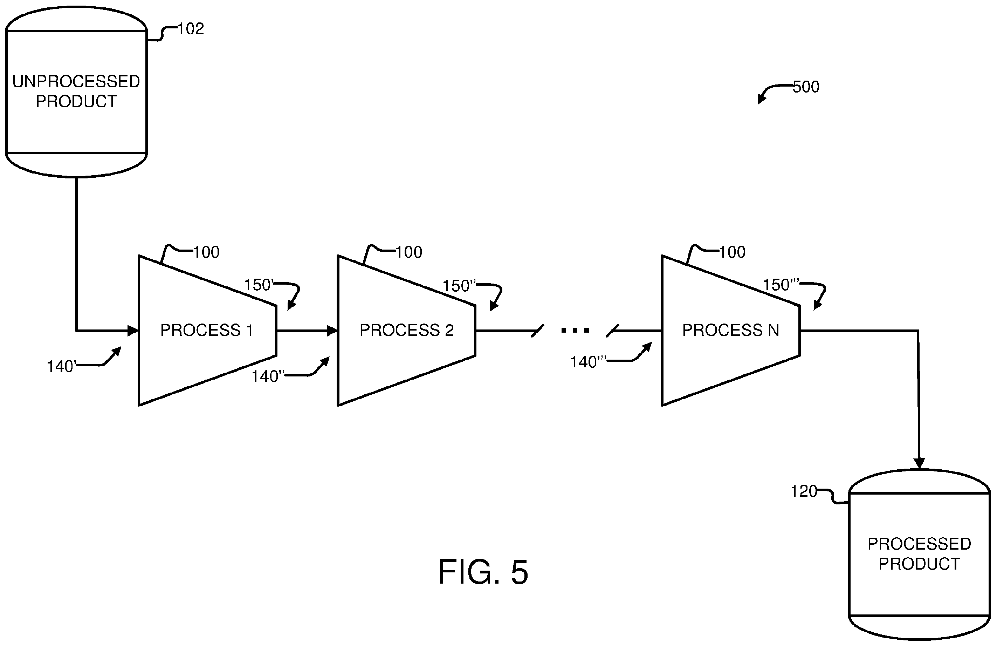

This disclosure is also related to system (not claimed) as illustrated in FIGURES 1 or 5.

This disclosure is also related to system (not claimed) capable of performing the process described herein.

This disclosure is also related to a system (not claimed) utilizing any of the technical features described herein.

This disclosure is also related to a system (not claimed) utilizing any of the process parameters described in TABLES 1-15.

This disclosure is also related to a pascalization process utilizing any of the process parameters described in TABLES 1 - 15.

This disclosure is also related to a pascalization process utilizing any of the technical features described herein.

Herein described is a pascalization system that includes a product input configured to receive unprocessed product, a pump configured to pump the unprocessed product into the pascalization system, a compressor configured to pressurize the unprocessed product into a pressurized product, a hold cell or hold cells configured to hold the pressurized product for a predetermined period of time, and a depressurization component or components configured to depressurize the pressurized product while subjecting the product to shear stresses and cavitation.

Herein described is a food or beverage product produced by a process of pressurizing the product to a first pressure to create a pressurized product, holding the pressurized product at the first pressure for a predetermined hold time, depressurizing the pressurized product to a second pressure to create a processed product, the second pressure being less than the first pressure, and outputting the processed product.

### BRIEF DESCRIPTION OF THE DRAWINGS

FIG. 1 is a schematic of a system for continuous high pressure processing of food and beverage products, according to one configuration disclosed herein;
FIG. 2A is a diagram of a hold cell configuration of the system of FIG. 1, according to one configuration disclosed herein;
FIG. 2B is a diagram of a hold cell configuration of the system of FIG. 1, according to one configuration disclosed herein;
FIG. 3 is a diagram of a pressure release component comprising shear and/or cavitation cell(s) of the system of FIG. 1, according to one configuration disclosed herein;
FIG. 4 is a flowchart of a method of continuous high pressure processing, according to one configuration disclosed herein; and
FIG. 5 is a schematic of a serialized system for continuous high pressure processing of food and beverage products, according to one configuration disclosed herein.

### DETAILED DESCRIPTION

As used herein, the terms "pressurization component", "compressor", "hydraulic press", and other variants of these terms may refer to a mechanism that is operative to pressurize material.

As used herein, the terms "product" and "beverage", and their pluralized forms, are used synonymously, and particular features of the invention should not be limited in scope by the use of either term.

As used herein, the term "shear cell", "depressurizer", "depressurizing valve", "cavitation cell", and variants thereof refer to any structural component having an orifice or opening arranged thereon operative to receive a pressurized material and subsequently depressurize the material while subjecting the material to stresses such as cavitation and shear.

As a non-limiting example, particular depressurizers that may be used to implement certain concepts of the invention include a homogenizing unit or an emulsifying unit configured to receive pressurized material at a first end and dispense depressurized material from a second end.

The following detailed description is directed to technologies for continuous high pressure processing of food and beverage products, and other materials. Through an implementation of the various technologies disclosed herein, a material can be passed through a pressurization-depressurization process that, when implemented as described herein, significantly reduces or destroys unwanted and otherwise undesirable pathogens.

In one implementation, a pascalization method includes pressurizing material to a specific pressure, holding the pressurized material at the specific pressure for a desired period of time, and depressurizing the material while subjecting the material to stresses such as cavitation and shear. The cavitation and shear are provided through a depressurization component or components, such as a valve, series of valves, or other components. Additionally, a relatively inert gas may also be injected into the material prior to pressurization to enhance the effects of the cavitation. Furthermore, although undergoing depressurization which may typically provide heat, such heat in the described process may be negligible from other heat-reliant processes such as pasteurization.

As noted above, previous implementations of high pressure processing of food and beverage products require a batch processing technique that is time-consuming and costly. However, the technologies described herein provide for a continuous process that has several technical advantages and benefits over batch processing. Generally, the continuous process results in cost savings, as well, and may provide for safe and desirable products that more closely match a "raw" or natural state and flavor of products such as juices, extracts, and other materials.

It should be appreciated that the subject matter presented herein may be implemented as a computer-controlled pascalization process, a user-controlled pascalization process, or any other suitable process for continuous high pressure processing of materials. While the subject matter described herein is presented in the general context of one particular arrangement of a system and possibly a serialized system, those skilled in the art will recognize that other implementations may be performed in combination with other types of systems that may be substantially different in appearance and arrangement of those illustrated herein.

Those skilled in the art will also appreciate that aspects of the subject matter described herein may be practiced in conjunction with other processes for implementing processed materials, such as with multiple mixed materials, blended materials, and other such modifications without departing from the scope of this disclosure.

In the following detailed description, references are made to the accompanying drawings that form a part hereof, and that show, by way of illustration, specific configurations or examples. The drawings herein are not drawn to scale. Like numerals represent like elements throughout the several figures (which may be referred to herein as a "FIG." or "FIGS.").

FIG. 1 is a schematic of a system 100 for continuous high pressure processing of food and beverage products, and possibly other materials, according to one configuration disclosed herein. As illustrated, the system 100 includes an inlet 140 of unprocessed product 102. The inlet 140 may include a large tank, batch, or continuous feed of material. The inlet may include a tank sized to hold between 1,000 and 5,000 liters of unprocessed product 102. The inlet 140 may include a plurality of tanks selectively actuated to supply the unprocessed product 102 to the system. In certain implementations, the inlet 140 may include a plurality of tanks that provide different variations of the unprocessed product 102 that may be proportionally blended or mixed together via dosing pumps (not shown) to supply the system 100 described herein. The material may include relatively low or high acid food and beverage products. In certain embodiments, the product is a high acid food or beverage product. A high acid food or beverage product is one with a pH less than or equal to 4.6. The food and beverage products may include juices, blended juices, smoothies, teas, blended teas, water products, coconut water products, extracts, or other products.

The unprocessed product may be controllably input into the system 100 through a valve 103. The valve 103 may include any suitable valve such as a butterfly valve, ball valve, or other mechanical component allowing the controlled release of an input of the unprocessed product 102 into the system 100.

Upon input into the system 100, a pump 104 may pump or otherwise force the unprocessed product 102 towards one or more compressors 106. The compressors 106 may, according to at least one implementation, be a part of a branch circuit 105 providing for relatively even distribution of product across the one or more compressors 106. The compressors 106 are configured to operatively compress the unprocessed material 102 to a pressurized state. In certain embodiments, the unprocessed product is pressurized to a pressure of less than 60,000 psi (410 MPa), or between about 20,000-60,000 psi (about 140-410 MPa), or from about 30,000- 60,000 psi (about 210-410 MPa) or from about 40,000-60,000 psi (about 280-410 MPa), or about 45,000psi (about 310 MPa). Therefore, the pressure applied to the unprocessed product 102 is dramatically lower than the pressures used in conventional batch high pressure processing of products - in some cases as little as half the pressure of conventional batch high pressure processing techniques. The compressed or pressurized product may subsequently be directed to a unifying circuit 107 such that multiple flow paths from an exit of the one or more compressors 106 are joined into a single flow path. According to one implementation, the pressurized state is a pressure of about or greater than twenty-five thousand pounds per square inch (about or greater than one hundred and seventy megapascal), or about or greater than forty- five thousand pounds per square inch (about or greater than three hundred and ten megapascal), or about than sixty thousand pounds per square inch (about four hundred and ten megapascal). Other pressures and process parameters are described more fully below with reference to Tables 1 through 15.

It should be understood that a single compressor may be utilized, multiple compressors may be utilized, and several different arrangements of flowpaths may be utilized that can differ from the illustrated system 100. For example, multiple parallel flowpaths can be implemented according to one implementation. Furthermore, if a single flowpath is implemented, the circuits 105 and 107 may be omitted, or may be usable to sample or bleed off material.

Additionally, according to one implementation, a relatively inert gas or other gas may be injected into the unprocessed beverage using component 124 prior to pressurizing the product to create the pressurized product. As used herein, the phrase "relatively inert gas" refers to any gas useable in the discloses process whereby oxidative or other such properties are not predominantly responsible for reduction in food borne pathogens. According to the discloses processes, these relatively inert gases assist in cavitation and additive stresses on, within, or throughout the food borne pathogens. Such gases may include carbon dioxide, Argon, Nitrous Oxide, Nitrogen, or other suitable gases. These gases may enhance the continuous process described herein.

The pressurized product is subsequently held in the pressurized state within the hold cell or hold cells 108 for a predetermined or desired period of time. The period of time may be relatively longer than any conventional process such as conventional homogenization or emulsification processes or the batch process described above. For example, according to some implementations, the period of time may range from about one (1) minute to about ten (10) or more minutes. In certain instances, the hold time is one or more minutes, 3 or more minutes, 5 or more minutes. According to one implementation, the predetermined hold time is between about 3 and about 6 minutes. According to one implementation, the predetermined hold time is about 6 minutes. According to another implementation, the predetermined hold time is about nine minutes.

The hold cells 108 may be arranged to maintain the specified pressure of the pressurized product while allowing for the aggregation of gaseous discharge and ambient air to collect in a manner than allows for removal of the ambient air or gaseous discharge through a priming valve 110.

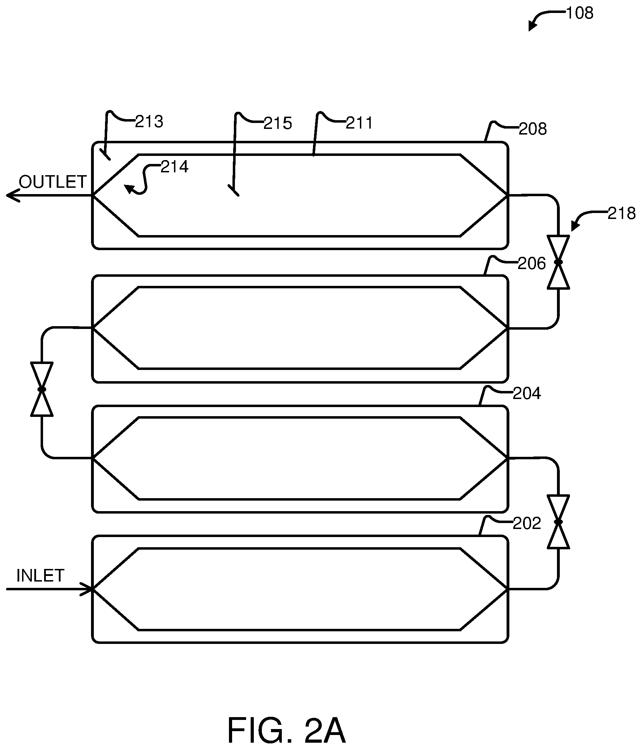

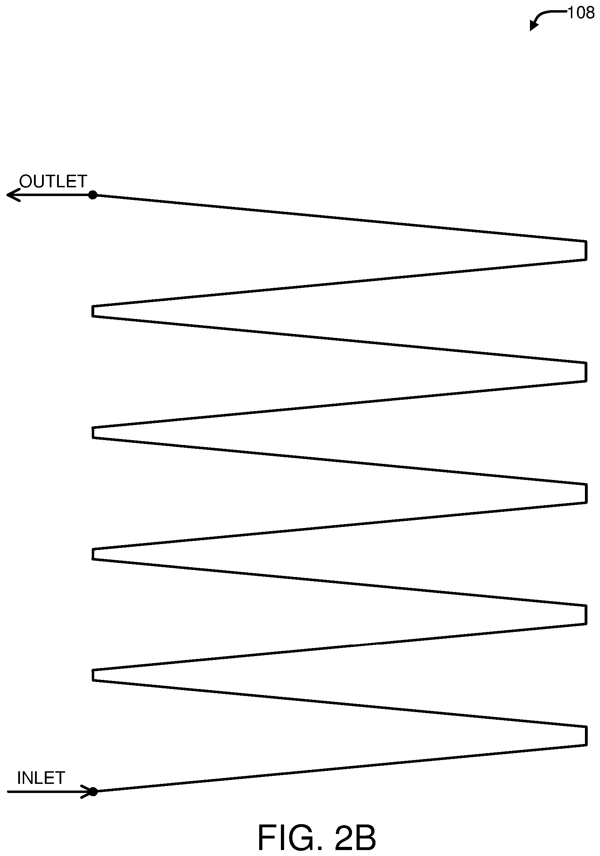

The arrangement of the priming valve 110 and hold cells 108 is such that the ambient air and/or gaseous discharge flows upwards and precedes the flow of pressurized product according to one implementation. According to other implementations, the priming valve 110 may be configured to utilize a vacuum pump or other apparatus to aid in the removal of ambient air or gaseous discharge from the flow path proximal to the hold cells 108. Other arrangement of the priming valve 110 and hold cells may also be applicable. Additionally, particular example forms of the hold cells 108 are provided and described with reference to FIGS. 2A and 2B, below.

Upon being subjected to the pressurized state for the predetermined and/or desired period of time, the pressurized product is decompressed, uncompressed, or otherwise depressurized using shear and/or cavitation cells 112. As described herein, it has been found that the combination of application of pressure (e.g., around 20,000-60,000 psi (around 140-410 MPa)) for a period of time (e.g., around one to ten minutes) followed by the rapid depressurization of the product through one or more shear/cavitation cells is effective in the substantial reduction (e.g., a 5-6 log reduction) or elimination of food spoilage microorganisms, such as mold and yeast. Moreover, it has been found that the process described herein is effective in a reduction (e.g., at least a 2 log reduction) of other food or beverage product pathogens.

The shear and/or cavitation cells include any structural component having an orifice or opening arranged thereon operative to receive the pressurized material and subsequently depressurize the material while subjecting the material to stresses such as cavitation and shear. The cavitation and shear are produced along the flow path generally flowing from an inlet of the shear/cavitation cells 112 and an exit of the shear/cavitation cells 112. The flow path may be coaxial to the orifice in at least one implementation. Generally, the turbulent flow and stresses associated with passing and depressurizing the pressurized product through the shear/cavitation cells 112 can be represented by an upper limit Reynolds Number of about NRe = 10^5. It should be understood that this is a general upper limit, and varying amount of turbulent flow, shear, cavitation, and other stresses may result in a significantly different Reynolds Number upper limit or threshold depending upon particular process parameters chosen from the Tables 1 through 15 presented below.

As an example implementation, particular shear and cavitation cells 112 can include a homogenizing unit or an emulsifying unit configured to receive pressurized material at a first end and dispense depressurized material from a second end. As another example, the shear and cavitation cells 112 may include a series of one or more valves configured to sequentially depressurize the pressurized product. Each valve may be substantially similar in appearance, size, and function. Alternatively, different sizes and orientations of valves or orifices may be implemented. The shear and cavitation cells 112 may be arranged serially along the flow path of the fluid such that the outlet of one shear and cavitation cell may supply the inlet of the next shear and cavitation cell. The number of shear and cavitation cells may vary in different implementations of the system 100. In certain implementations, the number of shear and cavitation cells 112 may be between 2 and 15 cells. In certain implementations, the number of shear and cavitation cells 112 may be between 4 and 12 cells. In certain implementations, the number of shear and cavitation cells 112 may be between 6 and 11 cells. In some implementations, sets of shear and cavitation cells 112 may be arranged in parallel along the flow path.

Upon exit of the shear/cavitation cells 112, the pressurized product is converted to an unpressurized state as compared to the pressurized state. This conversion from the pressurized state to the unpressurized state causes stress to individual components making up the product. Such stress causes microscopic biological agents such as food-borne pathogens to be disturbed in such a manner as to inactivate or at least partially destroy them. The disturbing of the food borne pathogens reduces the effective number of the food borne pathogens to an amount within safe limits for primary packing for consumer use and consumption under some circumstances.

In certain instances, the system and process described herein reduces the number of active cells of an organism in a liquid by at least 1 log unit, or at least 2 log units, or at least 3 log units, or at least 4 log units, or at least 5 log units, when compared to the liquid without processing. In certain embodiments, activation is reduced by more than 5 log units. In certain embodiments, activation of at least one organism is reduced by between 4 and 6 log units. In certain instances, the active cells include mold. In certain embodiments, the active cells include yeast. In certain embodiments, the active cells include pathogenic cells. In specific embodiments, the active cells include at least one gluconobateria. In certain embodiments, the active cells include at least one bacillus organism. In certain embodiments, the active cells include at least one acetobacteria. In certain embodiments, the active cells include at least one clostridium bacteria. In certain embodiments, the active cells include at least one lactic acid bacteria. In certain embodiments, the active cells include at least one e. coli. In certain embodiments, the active cells include at least one salmonella. In certain embodiments, the active cells include at least one lysteria. In certain embodiments, the active cells include one or more active cells that contribute to food or beverage spoilage or reduced product shelf life.

After successful reduction of the food borne pathogens to safe amounts due to the combination of action of holding the pressurized product in the pressurized state within the hold cells 108, and the subjection of stresses, shear, and cavitation in the shear/cavitation cells 112, the unpressurized product is cooled through cooling component 114 and controllably output using output valve/check valve 116 as processed product 120. The processed product 120 may be supplied to a finished product tank. The finished product tank may be a 10,000 liter tank that may supply a filling line configured to fill 600 bottles per minute of 500 mL bottles to run for at least a half an hour. Additionally, if desired, gas may be injected through component 122 such that a carbonated beverage is produced at output 150. It is noted that the cooling or chilling component 114 may also be integrally arranged about the shear/cavitation cells 112 such that the shear/cavitation cells 112 are cooled throughout any process being implemented by the system 100.

In certain instances, the cooling component 114 may cool the unpressurized product to provide the processed product 120 at a suitable cold supply chain temperature. The processed product 120 may be maintained at the cold supply chain temperature throughout the filling of packaged product and delivery to customers and/or consumers. In certain instances, the processed product 120 may supply an aseptic filling process to produce packaged food or beverage products. The cold supply chain temperature may be a temperature at or below which growth may be suppressed for any remaining pathogens in the unpressurized product, such as spore former microorganisms. The cold supply chain temperature may be a temperature at or below which growth of spore formers may be suppressed. For example, the cold supply chain temperature may be between 0°C and 20°C. In certain instances, the cold supply chain temperature is between 3°C and 10°C. In certain instances, the cold supply chain temperature is between 4°C and 8°C.

Accordingly, unprocessed product 102 input at input 140 and processed product output at output 150 is subjected to a controlled and continuous pascalization process. The unprocessed product 102 may be relatively raw, natural juice or beverage product that, when processed according these techniques, retains beneficial qualities such as flavor, mouthfeel, and texture that may be otherwise lost or diminished in conventional pasteurization processes.

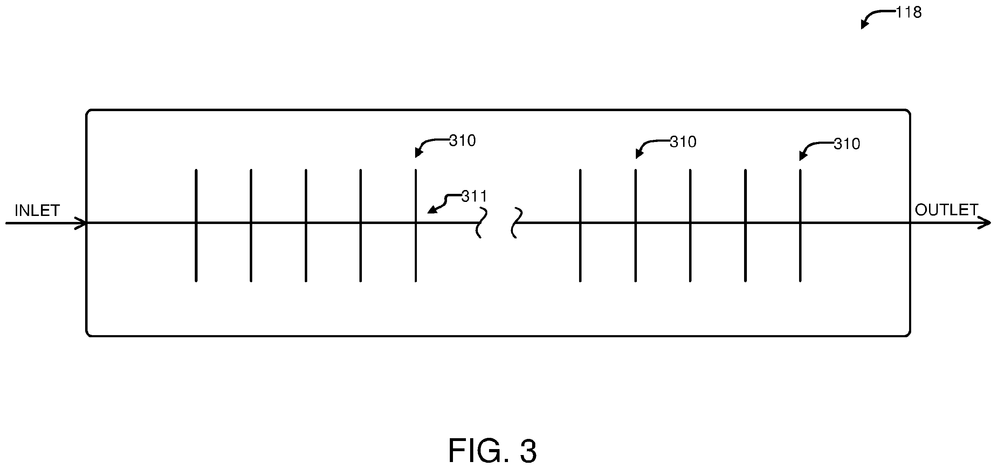

As described above, the system 100 may provide for controlled pascalization in a relatively continuous manner such that food-borne pathogens are reduced to safe levels. The system 100 may include at least a pressurization component, a hold cell, and a shear/cavitation cell. The shear/cavitation cell may also be termed a depressurization component. Hereinafter, particular examples of the hold cell(s) 108 and the shear/cavitation cell(s) 112 are described with reference to FIGS. 2A, 2B, and 3.

FIG. 2A is a diagram of a hold cell configuration 108 of the system of FIG. 1, according to one configuration disclosed herein. As shown, the hold cells 108 may include one or more individual accumulation cells 202, 204, 206, and 208. The accumulation cells 202, 204, 206, and 208 may each include a cavity 215 formed therein. The cavity 215 may include an outer cylindrical wall 211 having a central axis coaxial to a flow path through the particular accumulation cell. Each cavity 215 may have a frustoconical inlet and outlet 214 disposed to allow flowing of pressurized material from the inlet to the outlet. In implementations, the inlet and outlet may be reversed without departing from the scope of this disclosure. Additionally, the individual accumulation cells 202, 204, 206, and 208 include strong outer walls 213 configured to retain the pressurized state of the pressurized material without significant deformation of the accumulation cells 202, 204, 206, and 208 and the associated cavities 215. The valves or joining components 218 may be used to sever or connect each accumulation cell, or possibly inactivate a particular accumulation cell, such that differing continuous processes are possible. For example, each accumulation cell may be configured to receive, hold, and output pressurized fluid in sequence rather than in the serial arrangement illustrated. Accordingly, other arrangements of the accumulation cells may be applicable, and this disclosure should not be limited to the particular form illustrated.

FIG. 2B is a diagram of an alternate hold cell configuration 108 of the system of FIG. 1, according to one configuration disclosed herein. As illustrated, the alternate hold cell configuration may include a length of tubing 220 arranged to provide a specified time of travel between an inlet and outlet that is approximately equal to the desired hold time described above. The length of tubing may be arranged in any desirable manner, including in a helical spiral, ramped or sinusoidal arrangement, or in multiple discrete lengths of tubing joined to create the overall length of tubing. In certain instances, the length of tubing 220 may be formed as a coil with the inlet from the one or more compressors 106 at the bottom of the coil and the outlet to the shear/cavitation cell(s) 112 at the top of the coil. The coil may be formed from a single length of pipe that is bent into a coil such that the number of fittings subject to the high pressure in the system 100 is reduced, thereby increasing the liability of the system 100. It is understood by those of ordinary skill in the art that any arrangement of tubing that allows accumulation of ambient air and/or gaseous discharge to be appropriately removed may be applicable to this disclosure.

With regard to stresses applied during pressurization, FIG. 3 is a diagram of a pressure release component 112 comprising shear and/or cavitation cell(s) of the system of FIG. 1, according to one configuration disclosed herein. As illustrated, the shear/cavitation cells include multiple pressure-releasing components 310 arranged about a flowpath extending from an inlet to an outlet of the pressure release component 118. Generally, the flowpath is coaxial to orifices 311 associated with each individual pressure-releasing component. Each component 310 may be similar in appearance and function, or may be different, depending upon any desired implementation. Additionally, the particular number of components 310 may be altered significantly. Thus, the disclosed technologies may include one or more pressure-releasing components 310. In certain implementations, the number of components 310 may be between 2 and 15 components. In certain implementations, the number of components 310 may be between 4 and 12 components. In certain implementations, the number of components 310 may be between 6 and 11 components. While shown as arranged in series, in some implementations, sets of components310 may be arranged in parallel along the flow path.

In certain embodiments, the hold cell is pressurized to a pressure of less than 60,000 psi (410 MPa), or between about 20,000-60,000 psi (about 140-410 MPa), or from about 30,000-60,000 psi (about 210-410 MPa) or from about 40,000-60,000 psi (about 280-410 MPa), or about 45,000psi (about 310 MPa).

Suitable pressure-releasing components may include valves, annular discs, perforated plates, or any other suitable component allowing a pressurized fluid to enter at one end of an orifice 311 at a first pressure, and exit the orifice 311 at a second pressure, where the second pressure is less than the first pressure. Furthermore, as the fluid passes through the associated orifice 311, cavitation may occur. During cavitation, any assistive gases injected through component 124 may provide additional cavitation and aid in disrupting food borne pathogens. Moreover, shear stresses caused from flowing through the orifices 311 may further disrupt food borne pathogens. When considered as a cumulative effect, such processes, stresses, shear, cavitation, and actions by the assistive gases can reduce the food borne pathogens greatly as compared to the unprocessed product 102.

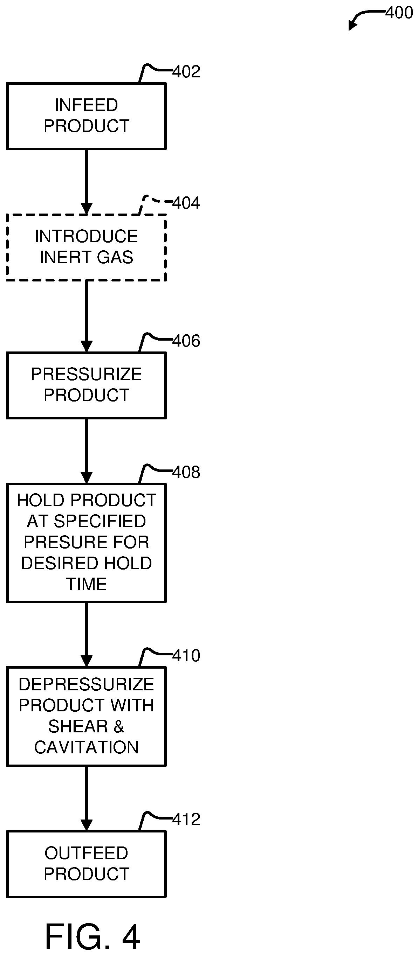

Thus, as presented above, several implementations of hold cells and/or pressure-releasing components are applicable to this disclosure. Hereinafter, a method of pascalization according to the techniques described herein is described with reference to FIG. 4.

FIG. 4 is a flowchart of a method 400 of continuous high pressure processing, according to one configuration disclosed herein. The method 400 includes infeeding, inputting, or otherwise introducing a product into a pascalization system, such as the system 100, at block 401. The infeed may be facilitated by pump 104 and/or valve 103.

The method 400 may further include introducing an inert gas into the product at block 404. The gas may be injected by component 124 in some implementations. Alternatively, no gas may be introduced.

The method 400 includes pressurizing the product to create a pressurized product at a specified pressure, at block 406. The pressurized product may include the gas from component 124, in some implementations. Additionally, pressurizing the product may include pressurizing the product with one or more compressors such as compressors 106. The one or more compressors 106 may be fed by individual flowpaths established by branching circuit 105 that can be joined in unifying circuit 107 after pressurization.

The method 400 also includes holding the pressurized product at the specified pressure for a predetermined or desired hold time, at block 408. The holding is facilitated through hold cells 108, which can include several different arrangements of tubing and/or accumulation cells as described above. Other forms of holding may include slowing of a flow per unit volume. Other variations may also be applicable.

In certain embodiments, the flow rate is above 500L/hr, between 500-4,000 L/hr, in certain subembodiments it is between 1,000-3,000 L/hr, and in certain subembodiments is about 500L/hr, or about 1,000 L/hr or about 2,000 L/hr ,or about 3,000 L/hr. In certain embodiments, there may be multiple systems 100 to further increase the processing flow rate. For example, four systems 100 may be arranged to each provide a 2,000 L/hr process for a total processed product production of 8,000 L/hr.

The method 400 further includes depressurizing the pressurized product while subjecting the depressurizing product to shear, stress, and/or cavitation, at block 410. The shear, stress, and/or cavitation is facilitated through the shear and/or cavitation cells 112. Thereafter, the unpressurized product may be chilled at chiller 114 and output or otherwise removed from the system 100 at block 412.

It is noted that the method 400 may be iterated any desired number of times while still maintaining the benefits of a continuous process. For example, FIG. 5 provides for alternative system configurations that allow for serialized processing having a N-number of passes of product to achieve a desired reduction in food-borne pathogens.

Turning to FIG. 5, a schematic of a serialized system 500 for continuous high pressure processing of food and beverage products is illustrated, according to one configuration disclosed herein. The system 500 includes one or more systems 100, arranged in a serial manner. The one or more systems 100 are arranged such that an output of a first system feeds the input of a second system. In this manner, any number of pascalization systems may be serialized to decrease food-borne pathogens to acceptable levels while retaining the technical benefits of a continuous pascalization process. For example, a first input 140' may receive the unprocessed product 102. Thereafter, an output 150' may be fed into input 140". This serialization may be repeated for up to N individual pascalization systems 100. Furthermore, each individual pascalization system may be operated according to any desired process parameters. Moreover, each individual pascalizaton system 100 may include any desired gas to be injected at component 124. Thus, a plurality of customized processes may be serialized. Exhaustive description of every possible iteration of these parameters is omitted herein for the sake of clarity in this description.

It is noted that within the method 400 and using a serialized system configuration such as system 500, several process variations may be implemented to achieve a desired or required reduction in food-borne pathogens associated with an output product. For example, a specified range of pressures, hold times, gas injection, number of iterations/passes, and other process changes can be implemented. Tables 1 through 15 below establish permutations of these variations that may be desirable:

**TABLE 1:**

| Gas Injection in Liquid (by volume) | Hold Time (minutes) | 20K-29.5K (PSI) | 20K-29.5K (PSI) | 20K-29.5K (PSI) |
|---|---|---|---|---|
| | | (140-200 MPa) | (140-200 MPa) | (140-200 MPa) |
| | **1** | 1 pass | 2 pass | 3 pass |
| | **2** | 1 pass | 2 pass | 3 pass |
| | **3** | 1 pass | 2 pass | 3 pass |
| | **4** | 1 pass | 2 pass | 3 pass |
| None | **5** | 1 pass | 2 pass | 3 pass |
| | **6** | 1 pass | 2 pass | 3 pass |
| | **7** | 1 pass | 2 pass | 3 pass |
| | **8** | 1 pass | 2 pass | 3 pass |
| | **9** | 1 pass | 2 pass | 3 pass |

**TABLE 2:**

| Gas Injection in Liquid (by volume) | Hold Time (minutes) | 43K-45K (PSI) | 43K-45K (PSI) | 43K-45K (PSI) |
|---|---|---|---|---|
| | | (300-310 MPa) | (300-310 MPa) | (300-310 MPa) |
| | **1** | 1 pass | 2 pass | 3 pass |
| | **2** | 1 pass | 2 pass | 3 pass |
| | **3** | 1 pass | 2 pass | 3 pass |
| | **4** | 1 pass | 2 pass | 3 pass |
| None | **5** | 1 pass | 2 pass | 3 pass |
| | **6** | 1 pass | 2 pass | 3 pass |
| | **7** | 1 pass | 2 pass | 3 pass |
| | **8** | 1 pass | 2 pass | 3 pass |
| | **9** | 1 pass | 2 pass | 3 pass |

**TABLE 3:**

| Gas Injection in Liquid (by volume) | Hold Time (minutes) | 55K-60K (PSI) | 55K-60K (PSI) | 55K-60K (PSI) |
|---|---|---|---|---|
| | | (380-410 MPa) | (380-410 MPa) | (380-410 MPa) |
| | **1** | 1 pass | 2 pass | 3 pass |
| | **2** | 1 pass | 2 pass | 3 pass |
| | **3** | 1 pass | 2 pass | 3 pass |
| | **4** | 1 pass | 2 pass | 3 pass |
| None | **5** | 1 pass | 2 pass | 3 pass |
| | **6** | 1 pass | 2 pass | 3 pass |
| | **7** | 1 pass | 2 pass | 3 pass |
| | **8** | 1 pass | 2 pass | 3 pass |
| | **9** | 1 pass | 2 pass | 3 pass |

**TABLE 4:**

| Gas Injection in Liquid (by volume) | Hold Time (minutes) | 20K-29.5K (PSI) | 20K-29.5K (PSI) | 20K-29.5K (PSI) |
|---|---|---|---|---|
| | | (140-200 MPa) | (140-200 MPa) | (140-200 MPa) |
| | **1** | 1 pass | 2 pass | 3 pass |
| | **2** | 1 pass | 2 pass | 3 pass |
| | **3** | 1 pass | 2 pass | 3 pass |
| Carbon Dioxide (0.2 to 1 V) | **4** | 1 pass | 2 pass | 3 pass |
| | **5** | 1 pass | 2 pass | 3 pass |
| | **6** | 1 pass | 2 pass | 3 pass |
| | **7** | 1 pass | 2 pass | 3 pass |
| | **8** | 1 pass | 2 pass | 3 pass |
| | **9** | 1 pass | 2 pass | 3 pass |

**TABLE 5:**

| Gas Injection in Liquid (by volume) | Hold Time (minutes) | 43K-45K (PSI) | 43K-45K (PSI) | 43K-45K (PSI) |
|---|---|---|---|---|
| | | (300-310 MPa) | (300-310 MPa) | (300-310 MPa) |
| | **1** | 1 pass | 2 pass | 3 pass |
| | **2** | 1 pass | 2 pass | 3 pass |
| | **3** | 1 pass | 2 pass | 3 pass |
| Carbon Dioxide (0.2 to 1 V) | **4** | 1 pass | 2 pass | 3 pass |
| | **5** | 1 pass | 2 pass | 3 pass |
| | **6** | 1 pass | 2 pass | 3 pass |
| | **7** | 1 pass | 2 pass | 3 pass |
| | **8** | 1 pass | 2 pass | 3 pass |
| | **9** | 1 pass | 2 pass | 3 pass |

**TABLE 6:**

| Gas Injection in Liquid (by volume) | Hold Time (minutes) | 55K-60K (PSI) | 55K-60K (PSI) | 55K-60K (PSI) |
|---|---|---|---|---|
| | | (380-410 MPa) | (380-410 MPa) | (380-410 MPa) |
| | **1** | 1 pass | 2 pass | 3 pass |
| | **2** | 1 pass | 2 pass | 3 pass |
| | **3** | 1 pass | 2 pass | 3 pass |
| Carbon Dioxide (0.2 to 1 V) | **4** | 1 pass | 2 pass | 3 pass |
| | **5** | 1 pass | 2 pass | 3 pass |
| | **6** | 1 pass | 2 pass | 3 pass |
| | **7** | 1 pass | 2 pass | 3 pass |
| | **8** | 1 pass | 2 pass | 3 pass |
| | **9** | 1 pass | 2 pass | 3 pass |

**TABLE 7:**

| Gas Injection in Liquid (by volume) | Hold Time (minutes) | 20K-29.5K (PSI) | 20K-29.5K (PSI) | 20K-29.5K (PSI) |
|---|---|---|---|---|
| | | (140-200 MPa) | (140-200 MPa) | (140-200 MPa) |
| | **1** | 1 pass | 2 pass | 3 pass |
| | **2** | 1 pass | 2 pass | 3 pass |
| | **3** | 1 pass | 2 pass | 3 pass |
| Argon (0.2 to 1 V) | **4** | 1 pass | 2 pass | 3 pass |
| | **5** | 1 pass | 2 pass | 3 pass |
| | **6** | 1 pass | 2 pass | 3 pass |
| | **7** | 1 pass | 2 pass | 3 pass |
| | **8** | 1 pass | 2 pass | 3 pass |
| | **9** | 1 pass | 2 pass | 3 pass |

**TABLE 8:**

| Gas Injection in Liquid (by volume) | Hold Time (minutes) | 43K-45K (PSI) | 43K-45K (PSI) | 43K-45K (PSI) |
|---|---|---|---|---|
| | | (300-310 MPa) | (300-310 MPa) | (300-310 MPa) |
| | **1** | 1 pass | 2 pass | 3 pass |
| | **2** | 1 pass | 2 pass | 3 pass |
| | **3** | 1 pass | 2 pass | 3 pass |
| Argon (0.2 to 1 V) | **4** | 1 pass | 2 pass | 3 pass |
| | **5** | 1 pass | 2 pass | 3 pass |
| | **6** | 1 pass | 2 pass | 3 pass |
| | **7** | 1 pass | 2 pass | 3 pass |
| | **8** | 1 pass | 2 pass | 3 pass |
| | **9** | 1 pass | 2 pass | 3 pass |

**TABLE 9:**

| Gas Injection in Liquid (by volume) | Hold Time (minutes) | 55K-60K (PSI) | 55K-60K (PSI) | 55K-60K (PSI) |
|---|---|---|---|---|
| | | (380-410 MPa) | (380-410 MPa) | (380-410 MPa) |
| | **1** | 1 pass | 2 pass | 3 pass |
| | **2** | 1 pass | 2 pass | 3 pass |
| | **3** | 1 pass | 2 pass | 3 pass |
| Argon (0.2 to 1 V) | **4** | 1 pass | 2 pass | 3 pass |
| | **5** | 1 pass | 2 pass | 3 pass |
| | **6** | 1 pass | 2 pass | 3 pass |
| | **7** | 1 pass | 2 pass | 3 pass |
| | **8** | 1 pass | 2 pass | 3 pass |
| | **9** | 1 pass | 2 pass | 3 pass |

**TABLE 10:**

| Gas Injection in Liquid (by volume) | Hold Time (minutes) | 20K-29.5K (PSI) | 20K-29.5K (PSI) | 20K-29.5K (PSI) |
|---|---|---|---|---|
| | | (140-200 MPa) | (140-200 MPa) | (140-200 MPa) |
| | **1** | 1 pass | 2 pass | 3 pass |
| | **2** | 1 pass | 2 pass | 3 pass |
| | **3** | 1 pass | 2 pass | 3 pass |
| Nitrous Oxide (0.2 to 1 V) | **4** | 1 pass | 2 pass | 3 pass |
| | **5** | 1 pass | 2 pass | 3 pass |
| | **6** | 1 pass | 2 pass | 3 pass |
| | **7** | 1 pass | 2 pass | 3 pass |
| | **8** | 1 pass | 2 pass | 3 pass |
| | **9** | 1 pass | 2 pass | 3 pass |

**TABLE 11:**

| Gas Injection in Liquid (by volume) | Hold Time (minutes) | 43K-45K (PSI) | 43K-45K (PSI) | 43K-45K (PSI) |
|---|---|---|---|---|
| | | (300-310 MPa) | (300-310 MPa) | (300-310 MPa) |
| | **1** | 1 pass | 2 pass | 3 pass |
| | **2** | 1 pass | 2 pass | 3 pass |
| | **3** | 1 pass | 2 pass | 3 pass |
| Nitrous Oxide (0.2 to 1 V) | **4** | 1 pass | 2 pass | 3 pass |
| | **5** | 1 pass | 2 pass | 3 pass |
| | **6** | 1 pass | 2 pass | 3 pass |
| | **7** | 1 pass | 2 pass | 3 pass |
| | **8** | 1 pass | 2 pass | 3 pass |
| | **9** | 1 pass | 2 pass | 3 pass |

**TABLE 12:**

| Gas Injection in Liquid (by volume) | Hold Time (minutes) | 55K-60K (PSI) | 55K-60K (PSI) | 55K-60K (PSI) |
|---|---|---|---|---|
| | | (380-410 MPa) | (380-410 MPa) | (380-410 MPa) |
| | **1** | 1 pass | 2 pass | 3 pass |
| | **2** | 1 pass | 2 pass | 3 pass |
| | **3** | 1 pass | 2 pass | 3 pass |
| Nitrous Oxide (0.2 to 1 V) | **4** | 1 pass | 2 pass | 3 pass |
| | **5** | 1 pass | 2 pass | 3 pass |
| | **6** | 1 pass | 2 pass | 3 pass |
| | **7** | 1 pass | 2 pass | 3 pass |
| | **8** | 1 pass | 2 pass | 3 pass |
| | **9** | 1 pass | 2 pass | 3 pass |

**TABLE 13:**

| Gas Injection in Liquid (by volume) | Hold Time (minutes) | 20K-29.5K (PSI) | 20K-29.5K (PSI) | 20K-29.5K (PSI) |
|---|---|---|---|---|
| | | (140-200 MPa) | (140-200 MPa) | (140-200 MPa) |
| | **1** | 1 pass | 2 pass | 3 pass |
| | **2** | 1 pass | 2 pass | 3 pass |
| | **3** | 1 pass | 2 pass | 3 pass |
| Nitrogen (0.2 to 1 V) | **4** | 1 pass | 2 pass | 3 pass |
| | **5** | 1 pass | 2 pass | 3 pass |
| | **6** | 1 pass | 2 pass | 3 pass |
| | **7** | 1 pass | 2 pass | 3 pass |
| | **8** | 1 pass | 2 pass | 3 pass |
| | **9** | 1 pass | 2 pass | 3 pass |

**TABLE 14:**

| Gas Injection in Liquid (by volume) | Hold Time (minutes) | 43K-45K (PSI) | 43K-45K (PSI) | 43K-45K (PSI) |
|---|---|---|---|---|
| | | (300-310 MPa) | (300-310 MPa) | (300-310 MPa) |
| | **1** | 1 pass | 2 pass | 3 pass |
| | **2** | 1 pass | 2 pass | 3 pass |
| | **3** | 1 pass | 2 pass | 3 pass |
| Nitrogen (0.2 to 1 V) | **4** | 1 pass | 2 pass | 3 pass |
| | **5** | 1 pass | 2 pass | 3 pass |
| | **6** | 1 pass | 2 pass | 3 pass |
| | **7** | 1 pass | 2 pass | 3 pass |
| | **8** | 1 pass | 2 pass | 3 pass |
| | **9** | 1 pass | 2 pass | 3 pass |

**TABLE 15:**

| Gas Injection in Liquid (by volume) | Hold Time (minutes) | 55K-60K (PSI) | 55K-60K (PSI) | 55K-60K (PSI) |
|---|---|---|---|---|
| | | (380-410 MPa) | (380-410 MPa) | (380-410 MPa) |
| | **1** | 1 pass | 2 pass | 3 pass |
| | **2** | 1 pass | 2 pass | 3 pass |
| | **3** | 1 pass | 2 pass | 3 pass |
| Nitrogen (0.2 to 1 V) | **4** | 1 pass | 2 pass | 3 pass |
| | **5** | 1 pass | 2 pass | 3 pass |
| | **6** | 1 pass | 2 pass | 3 pass |
| | **7** | 1 pass | 2 pass | 3 pass |
| | **8** | 1 pass | 2 pass | 3 pass |
| | **9** | 1 pass | 2 pass | 3 pass |

### EXAMPLE

In one specific example, apple juice was inoculated with 6.23 log of yeast and mold. After pressurization of the inoculated apple juice at 45,000 psi (310 MPa) for one minute, the inoculated apple juice was found to have a 2.1 log load of mold and yeast remaining. After further subjecting the pressurized inoculated apple juice to shear and stress at an emulsion cell as described herein to produce a depressurized processed apple juice, it was found that there was 0.0 log load of mold and yeast remaining in the processed apple juice. Therefore, it was found that the combination of subjecting a product to pressure (e.g., 45,000 psi (310 MPa)) for a hold time (e.g., at least one minute) along with subjecting the pressurized product to rapid depressurization via a shear/cavitation cell resulted in a 6.23 log reduction in the mold and yeast present in the apple juice.

### CONCLUSION

Based on the foregoing, it should be appreciated that technologies for continuous high pressure processing of materials and, potentially, other aspects of the operation of a pascalization system have been presented herein. Moreover, although the subject matter presented herein has been described in language specific to a particular system arrangement and methodological acts, it is to be understood that the invention defined in the appended claims is not necessarily limited to the specific features, acts, or media described herein. Rather, the specific features, acts, and media are disclosed as example forms of implementing the claims.

## Claims

1. A continuous pascalization process, comprising:
a. receiving (401), at an inlet (140), an unprocessed product (102) of the continuous pascalization process, wherein the unprocessed product comprises a liquid;
b. pressurizing (406) the unprocessed product to a first pressure to create a pressurized product, wherein the first pressure is from 20,000 psi to 60,000 psi (140 MPa to 410 MPa);
c. holding (408) the pressurized product at the first pressure for a predetermined hold time, wherein a length of tubing (220) is arranged to provide a specified time of travel between the inlet and an outlet that is approximately equal to the predetermined hold time, wherein the pressurized product is held at the first pressure as the pressurized product flows through the length of tubing (220), wherein the predetermined hold time is at least one minute;
d. depressurizing the pressurized product to a second pressure to create a processed product of the continuous pascalization process, the second pressure being less than the first pressure, wherein depressurizing the product includes causing the pressurized product to flow through shear and/or cavitation cells (112) arranged serially along a flow path of the pressurized product, the shear and/or cavitation cells (112) including multiple pressure releasing components (310) arranged about the flow path of the pressurized product, wherein causing the pressurized to flow through multiple pressure releasing components (310) subjects the pressurized product to multiple shear stress events; and
e. supplying the processed product from an outlet.

2. The process of claim 1, wherein the unprocessed product (102) is a juice beverage or an extract of a fruit or vegetable or is a dairy product.

3. The process of claim 1, wherein the unprocessed product (102) has food-borne pathogens existing therein whereby such stress is applied to the food-borne pathogens that the processed product includes a reduced number of food-borne pathogens as compared to the unprocessed product.

4. The process of claim 3 whereby such stress is applied to the food-borne pathogens that the reduction is by at least 2 log units of active pathogen.

5. The process of claim **1,** wherein holding the pressurized product comprises: retaining the pressurized product at the first pressure in one or more hold cells (108).

6. The process of claim **1,** wherein the first pressure is about forty-five thousand pounds per square inch (310MPa).

7. The process of claim **1,** wherein depressurizing the pressurized product comprises subjecting the pressurized product to one or more cavitation events.

8. The process of claim 1, wherein the processed product is absent an added preservative agent.

9. The process of claim 1, wherein the unprocessed product is a component usable in an alcoholic beverage having an alcohol content less than 15.5% by volume.

10. The process of claim 1, wherein depressurizing the pressurized product by causing the pressurized product to flow through the two or more pressure-releasing components subjects the pressurized product to two or more cavitation events.

11. The process of claim 1, wherein the processed product retains a flavor, a mouthfeel, and a texture of the unprocessed product.

## Patentansprüche

1. Kontinuierlicher Pascalisierungsprozess, umfassend:
a. Empfangen (401), an einem Einlass (140), eines unverarbeiteten Produkts (102) des kontinuierlichen Pascalisierungsprozesses, wobei das unverarbeitete Produkt eine Flüssigkeit umfasst;
b. Druckbeaufschlagen (406) des unverarbeiteten Produkts auf einen ersten Druck, um ein druckbeaufschlagtes Produkt zu erzeugen, wobei der erste Druck von 20.000 psi bis 60.000 psi (140 MPa bis 410 MPa) beträgt;
c. Halten (408) des druckbeaufschlagten Produkts auf dem ersten Druck für eine vorbestimmte Haltezeit, wobei ein Leitungsstück (220) so angeordnet ist, dass es eine spezifizierte Durchlaufzeit zwischen dem Einlass und einem Auslass bereitstellt, die etwa gleich der vorbestimmten Haltezeit ist, wobei das druckbeaufschlagte Produkt auf dem ersten Druck gehalten wird, während das druckbeaufschlagte Produkt durch das Leitungsstück (220) strömt, wobei die vorbestimmte Haltezeit mindestens eine Minute beträgt;
d. Druckentlasten des druckbeaufschlagten Produkts auf einen zweiten Druck, um ein verarbeitetes Produkt des kontinuierlichen Pascalisierungsprozesses zu erzeugen, wobei der zweite Druck geringer als der erste Druck ist, wobei das Druckentlasten des Produkts einschließt, zu bewirken, dass das druckbeaufschlagte Produkt durch Scher- und/oder Kavitationszellen (112) strömt, die in Reihe entlang eines Strömungswegs des druckbeaufschlagten Produkts angeordnet sind, wobei die Scher- und/oder Kavitationszellen (112) mehrere druckentlastende Komponenten (310) einschließen, die um den Strömungsweg des druckbeaufschlagten Produkts herum angeordnet sind, wobei das Bewirken, dass das druckbeaufschlagte Produkt durch mehrere druckentlastende Komponenten (310) strömt, das druckbeaufschlagte Produkt mehreren Scherspannungsereignissen aussetzt; und
e. Zuführen des verarbeiteten Produkts aus einem Auslass.

2. Prozess nach Anspruch 1, wobei das unverarbeitete Produkt (102) ein Saftgetränk oder ein Extrakt einer Frucht oder eines Gemüses ist oder ein Milchprodukt ist.

3. Prozess nach Anspruch 1, wobei das unverarbeitete Produkt (102) darin vorhandene Lebensmittelpathogene aufweist, wodurch ein solcher Stress auf die Lebensmittelpathogene ausgeübt wird, dass das verarbeitete Produkt im Vergleich zum unverarbeiteten Produkt eine reduzierte Anzahl von Lebensmittelpathogenen einschließt.

4. Prozess nach Anspruch 3, wobei ein solcher Stress auf die Lebensmittelpathogene ausgeübt wird, dass die Reduktion mindestens 2 log-Einheiten an aktivem Pathogen beträgt.

5. Prozess nach Anspruch 1, wobei das Halten des druckbeaufschlagten Produkts umfasst: Halten des druckbeaufschlagten Produkts auf dem ersten Druck in einer oder mehreren Haltezelle(n) (108).

6. Prozess nach Anspruch 1, wobei der erste Druck etwa fünfundvierzigtausend Pfund pro Quadratzoll (310 MPa) beträgt.

7. Prozess nach Anspruch 1, wobei das Druckentlasten des druckbeaufschlagten Produkts ein Aussetzen des druckbeaufschlagten Produkts gegenüber einem oder mehreren Kavitationsereignis(sen) umfasst.

8. Prozess nach Anspruch 1, wobei das verarbeitete Produkt frei von einem zugesetzten Konservierungsmittel ist.

9. Prozess nach Anspruch 1, wobei das unverarbeitete Produkt eine Komponente ist, die in einem alkoholischen Getränk verwendet werden kann, das einen Alkoholgehalt von weniger als 15,5 Vol.-% aufweist.

10. Prozess nach Anspruch 1, wobei das Druckentlasten des druckbeaufschlagten Produkts durch Bewirken, dass das druckbeaufschlagte Produkt durch die zwei oder mehr druckentlastenden Komponenten strömt, das druckbeaufschlagte Produkt zwei oder mehr Kavitationsereignissen aussetzt.

11. Prozess nach Anspruch 1, wobei das verarbeitete Produkt einen Geschmack, ein Mundgefühl und eine Textur des unverarbeiteten Produkts beibehält.

## Revendications

1. Procédé de pascalisation en continu, comprenant :
a. la réception (401), au niveau d'une entrée (140), d'un produit non traité (102) du procédé de pascalisation en continu, dans lequel le produit non traité comprend un liquide ;
b. la mise sous pression (406) du produit non traité jusqu'à une première pression pour créer un produit sous pression, dans lequel la première pression va de 20 000 psi à 60 000 psi (140 MPa à 410 MPa) ;
c. le maintien (408) du produit sous pression à la première pression pendant un temps de maintien prédéterminé, dans lequel une longueur de tubage (220) est agencée pour fournir un temps de parcours spécifié entre l'entrée et une sortie, qui est approximativement égal au temps de maintien prédéterminé, dans lequel le produit sous pression est maintenu à la première pression à mesure que le produit sous pression s'écoule à travers la longueur de tubage (220), dans lequel le temps de maintien prédéterminé est d'au moins une minute ;
d. la mise hors pression du produit sous pression jusqu'à une seconde pression pour créer un produit traité du procédé de pascalisation en continu, la seconde pression étant inférieure à la première pression, dans lequel la mise hors pression du produit comporte le fait d'amener le produit sous pression à s'écouler à travers des cellules de cisaillement et/ou de cavitation (112) agencées en série le long d'une trajectoire d'écoulement du produit sous pression, les cellules de cisaillement et/ou de cavitation (112) comportant de multiples composants de relâchement de pression (310) agencés autour de la trajectoire d'écoulement du produit sous pression, dans lequel le fait d'amener le produit sous pression à s'écouler à travers de multiples composants de relâchement de pression (310) soumet le produit sous pression à de multiples événements de contrainte de cisaillement ; et
e. l'alimentation du produit traité à partir d'une sortie.

2. Procédé selon la revendication 1, dans lequel le produit non traité (102) est une boisson à base de jus ou un extrait d'un fruit ou légume ou est un produit laitier.

3. Procédé selon la revendication 1, dans lequel le produit non traité (102) a des pathogènes d'origine alimentaire existant dans celui-ci moyennant quoi une contrainte est appliquée aux pathogènes d'origine alimentaire de telle sorte que le produit traité comporte un nombre réduit de pathogènes d'origine alimentaire par comparaison avec le produit non traité.

4. Procédé selon la revendication 3 moyennant quoi une contrainte est appliquée aux pathogènes d'origine alimentaire de telle sorte que la réduction est d'au moins 2 unités logarithmiques de pathogène actif.

5. Procédé selon la revendication 1, dans lequel le maintien du produit sous pression comprend : le fait de retenir le produit sous pression à la première pression dans une ou plusieurs cellules de maintien (108).

6. Procédé selon la revendication 1, dans lequel la première pression est d'environ quarante-cinq mille livres par pouce carré (310 MPa).

7. Procédé selon la revendication 1, dans lequel la mise hors pression du produit sous pression comprend le fait de soumettre le produit sous pression à un ou plusieurs événements de cavitation.

8. Procédé selon la revendication 1, dans lequel le produit traité est dépourvu d'agent conservateur ajouté.

9. Procédé selon la revendication 1, dans lequel le produit non traité est un composant utilisable dans une boisson alcoolisée ayant une teneur en alcool inférieure à 15,5 % en volume.

10. Procédé selon la revendication 1, dans lequel la mise hors pression du produit sous pression en amenant le produit sous pression à s'écouler à travers les deux composants de relâchement de pression ou plus soumet le produit sous pression à deux événements de cavitation ou plus.

11. Procédé selon la revendication 1, dans lequel le produit traité conserve un arôme, une sensation en bouche et une texture du produit non traité.
